# EUROPÄISCHE PATENTSCHRIFT

(11) **EP 1 649 826 B1**
(45) Veröffentlichungstag und Bekanntmachung des Hinweises auf die Patenterteilung: **22.09.2010**
(21) Anmeldenummer: 05022540.8
(22) Anmeldetag: 15.10.2005
(51) Int. Cl.: A61C 17/06

(54) **Speichelsauger**
Saliva ejector
Aspirateur de salive

(30) Priorität: 23.10.2004 DE 102004051709
(43) Veröffentlichungstag der Anmeldung: 26.04.2006
(73) Patentinhaber: Neff, Andreas, 67177 Limburgerhof (DE); Gierich, Marc, 69469 Weinheim (DE)
(72) Erfinder: Neff, Andreas, 67177 Limburgerhof (DE); Gierich, Marc, 69469 Weinheim (DE)
(74) Vertreter: Patentanwälte Möll, Bitterich & Dr. Keller

(56) Entgegenhaltungen:
- US-A- 4 204 328
- US-A- 4 487 600
- US-A- 5 066 228
- US-A- 5 076 787

## Beschreibung

Die Erfindung betrifft ein Hilfsmittel zum Absaugen von Flüssigkeiten und Feststoffen aus dem Mund- und Rachenraum eines Patienten während dentalmedizinischer Behandlungen gemäß den Ansprüchen 1-15.

Im Rahmen dentalmedizinischer Behandlungen von Patienten besteht stets die Notwendigkeit, den sich im Mund- und Rachenraum ansammelnden Speichel des Patienten abzusaugen. Zu diesem Zweck sind sogenannte Speichelsauger weit verbreitet. Diese bestehen im Wesentlichen aus einem hakenförmig gebogenen Schlauchabschnitt, der mit seinem ersten Ende mit Unterdruck beaufschlagt wird und dessen zweites Ende in die Mundöffnung des Patienten eingehängt wird. Um ein Festsaugen des Speichelsaugers an der Mundschleimhaut des Patienten zu verhindern, was einerseits unangenehm für den Patienten ist und andererseits die Absaugfunktion beeinträchtigt, sitzt auf dem zweiten Ende des Speichelsaugers ein Kopfstück, das in seinem über das Schlauchende überstehenden Bereich gleichmäßig über den Umfang verteilte Längsschlitze als Saugöffnungen aufweist. Dadurch wird sichergestellt, dass neben einigen von der Mundschleimhaut des Patienten überdeckten Längsschlitze stets andere freie Längsschlitze zur Absaugung zur Verfügung stehen.

Ein Speichelsauger wird in US 4 204 328 offenbart.

Gleichzeitig besteht von zahnärztlicher Seite her für bestimmte durchzuführende Behandlungsmaßnahmen, wie zum Beispiel dem Zementieren oder Aufbringen von Ätzgel die Notwendigkeit, die Behandlungsstelle gezielt punktuell und mit hoher Saugkraft abzusaugen. Da dieser Forderung die Anordnung seitlicher Längsschlitze entgegensteht, ist es allgemeine Übung das Kopfstück vom Schlauch abzuziehen und die Behandlungsstelle mit der stirnseitigen Schlauchöffnung am Schlauchende direkt abzusaugen. Die Praxis zeigt jedoch, dass diese Vorgehensweise oftmals dazu führt, dass das Kopfstück verloren geht oder zu Boden fällt, so dass bei Fortsetzung der Behandlung ein neuer Speichelsauger benötigt wird.

Vor diesem Hintergrund besteht die Aufgabe der Erfindung darin, gattungsgemäße Speichelsauger derart weiter zu entwickeln, dass der Speichelsauger sowohl für das allgemeine als auch für das punktuelle Absaugen gleichermaßen geeignet ist, ohne dabei zerlegt werden zu müssen.

Diese Aufgabe wird durch ein Hilfsmittel mit den Merkmalen des Patentanspruchs 1 gelöst.

Vorteilhafte Ausführungsformen ergeben sich aus den Unteransprüchen.

Ein erster Vorteil des erfindungsgemäßen Hilfsmittels ergibt sich aus der Möglichkeit das Kopfstück zum Wechsel zwischen der ersten Saugposition und der zweiten Saugposition relativ gegenüber dem Schlauch bewegen zu können, wobei das Kopfstück fest mit dem Schlauch verbunden bleibt. Als Relativbewegung kommt eine Axial- oder Rotationsbewegung bezüglich der Längsachse des Schlauches sowie eine Kombination aus beidem in Frage. So ist es unmöglich das Kopfstück zu verlieren oder dass dieses zu Boden fällt, und es ist gewährleistet, dass für jede zahnärztliche Behandlung lediglich ein Speichelsauger benötigt wird.

In der Handhabung erweist sich ein erfindungsgemäßes Hilfsmittel als äußerst einfach und gestattet das Ausführen der Relativbewegung mit nur einer Hand; im Gegensatz zu bekannten Speichelsaugern, bei denen zum Ablösen des Kopfstücks beide Hände erforderlich waren. Dies ist für den Zahnarzt von großem Nutzen, da die zweite Hand aufgrund anderer Tätigkeiten oft nicht zur Verfügung steht.

Überraschenderweise erlangt ein erfindungsgemäßes Hilfsmittel diese Vorteile, ohne dessen konstruktive Ausbildung zu komplizieren. Die erweiterte Funktionalität gegenüber bekannten Speichelsaugern wird in einfacher Weise erreicht, so dass sich erfindungsgemäße Hilfsmittel ohne nennenswerte Teuerung gegenüber dem Stand der Technik herstellen lassen. Das bedeutet, dass ein Hersteller erfindungsgemäßer Hilfsmittel zum gleichen Preis erheblich verbesserte Speichelsauger anbieten kann, worin die wirtschaftliche Bedeutung der Erfindung zum Ausdruck kommt.

Eine vorteilhafte Ausführungsform der Erfindung sieht einen Anschlag am Schlauchabschnitt für das Kopfstück vor um eine axiale, rotative oder kombinierte Verschiebung des Kopfstücks über die erste oder zweite Saugpositionen hinaus zu verhindern. Ein solcher Anschlag kann beispielsweise über Auflaufflächen oder eine Ringschulter am Schlauchabschnitt bewerkstelligt werden. Besonders vorteilhaft ist die Kombination aus einer Zwangsführung und einem Anschlag, wie nachfolgend noch beschrieben ist.

Vorteilhafterweise besitzt ein erfindungsgemäßes Hilfsmittel Verriegelungen, die sicherstellen, dass das Kopfstück in der ersten oder zweiten Saugposition bleibt und nicht ungewollt verrutscht. In einfacher Umsetzung dieses Gedankens weist der Schlauch an entsprechender Stelle Umfangsverdickungen auf, so dass mit Aufschieben des Kopfstückes auf die Umfangsverdickung ein Reibschluss erzeugt wird.

Eine vorteilhafte Ausführungsform der Erfindung sieht eine Zwangsführung des Kopfstücks auf dem Schlauch vor. Dadurch ist der Verschiebeweg des Kopfstückes entlang des Schlauches strikt vorgegeben. Eine Zwangsführung wird bevorzugterweise durch eine Nut und einen darin eingreifenden Überstand, bspw. in Form eines Zapfens gebildet. Dabei ist die Nut vorzugsweise im Schlauch und der Zapfen vorzugsweise am Kopfstück angeordnet. Eine erste Alternative dieser Ausführungsform sieht eine oder mehrere achsparallele Nuten vor, woraus sich eine axiale Verschiebemöglichkeit des Kopfstücks ergibt.

Gemäß einer zweiten Alternative verläuft die Nut wendelförmig um den Schlauch, so dass für eine axiale Bewegung des Kopfstückes entlang des Schlauches zusätzlich eine Verdrehung des Kopfstückes gegenüber dem Schlauch vorzunehmen ist. Eine weitere Ausführungsform sieht wiederum eine kreisförmig angeordnete Nut vor, die eine Rotationsbewegung des Kopfstücks um die Längsachse des Schlauches vorgibt. Es liegt im Ermessen des jeweiligen Nutzers der Erfindung, welche der unterschiedlichen Alternativen ihm besser liegt.

In besonderer Weise eignet sich die Zwangsführung um gleichzeitig einen Anschlag oder eine Verriegelung für das Kopfstück zu bilden. Dabei bildet schon das stirnseitige Ende der Nut eine Anschlagfläche, gegen die der Zapfen mit Erreichen einer der beiden Saugpositionen aufläuft. Eine Verriegelung kann erreicht werden, indem die Zwangsführung am Ende eine Richtungsänderung, gegebenenfalls Richtungsumkehr, beispielsweise in Form eines Renkverschlusses vorgibt.

Damit eine kombinierte Dreh- und Axialbewegung des Kopfstücks zur Erlangung der anderen Saugposition schnell und ohne Umsetzen der Finger ausgeführt werden kann, weist die wendelförmige Nut eine große Ganghöhe auf. Auf diese Weise kann beispielsweise mit einer halben bis einer viertel Umdrehung ein Wechsel von der einen Saugposition zur anderen erreicht werden.

Um ein sicheres Ergreifen und Bewegen des Kopfstücks zu ermöglichen, weist das Kopfstück ganz oder teilweise Außenprofilierungen auf. Diese können ringförmig umlaufen, von einer Längsprofilierung gebildet sein oder auch eine Kombination aus beidem darstellen.

Gemäß einer besonders vorteilhaften Ausführungsform der Erfindung werden die Längsschlitze im zweiten Längsabschnitt des Kopfstücks von mehreren Längsarmen gebildet, die in seitlichem gegenseitigem Abstand aus dem ersten Längsabschnitt hervorgehen. Die Längsarme können dabei elastisch ausgebildet sein und zu ihrem freien Ende hin konvergieren. Auf diese Weise ist es möglich, beim Aufschieben des Kopfstücks auf den Schlauch die Längsarme durch den Schlauch aufzuspreizen, so dass dessen stirnseitige Öffnung zur punktuellen Absaugung zur Verfügung steht. Um auch in der ersten Saugposition eine möglichst große Saugfläche zur Verfügung zu stellen, sind die Enden der Längsarme vorteilhafterweise zur Längsachse hin gebogen. Daraus ergeben sich Saugschlitze mit parallelen Längsseiten.

Zur Vergrößerung der Saugfläche ist gemäß einer weiteren Ausführungsform eine sich konisch verjüngende Ausbildung der Längsarme zu ihrem freien Ende hin vorgesehen.

Das stirnseitige Ende des zweiten Längsabschnittes kann eine Öffnung aufweisen. Diese Öffnung kann allein durch die frei auskragenden Längsarme oder aber durch eine umfangsseitige Verbindung der Enden der Längsarme untereinander hergestellt werden. Die Ausbildung einer solchen stirnseitigen Öffnung erlaubt ein Durchschieben des Schlauches, so dass dieser zum punktuellen Absaugen zur Verfügung steht. Es ist aber auch möglich, dass das Kopfstück selbst mit seiner Öffnung als Saugende dient. Dabei schließt der Schlauch innerhalb des Kopfstücks an die Öffnung an.

Ferner kann sich eine zweiteilige Ausbildung des zweiten Endes des Schlauchabschnitts als vorteilhaft erweisen. Zu diesem Zweck kann ein hülsenförmiges Teil, insbesondere eine Spritzgussteil, auf das Ende des Schlauchabschnitts aufgepresst und so mit diesem verbunden werden. Bei der Umsetzung der erfindungsgemäßen Lehre wirkt im wesentlichen lediglich dieses Teil mit dem Kopfstück zusammen. Dadurch wird die Herstellung eines erfindungsgemäßen Hilfsmittels erheblich vereinfacht, indem der Schlauchabschnitt lediglich durch Extrudieren und Ablängen entsteht, während der in der Form komplexere Teil in einem davon unabhängigen Arbeitsschritt produziert wird.

Die Erfindung wird nachstehend anhand eines in der Zeichnung dargestellten Ausführungsbeispiels näher erläutert.

Es zeigen
- Fig. 1: eine Seitenansicht auf eine erste Ausführungsform eines erfindungsgemäßes Hilfsmittel in der ersten Saugposition,
- Fig. 2: das in Fig. 1 dargestellte Hilfsmittel in der zweiten Saugposition,
- Fig. 3: eine Draufsicht auf das freie Ende des in Fig. 2 dargestellten Hilfsmittel,
- Fig. 4: eine Schrägansicht auf eine zweite Ausführungsform eines Hilfsmittels welche kein Gegenstand der beanspruchten Erfindung ist und
- Fig. 5: eine Teilansicht auf den Endabschnitt einer weiteren Ausführungsform die kein Gegenstand der beanspruchten Erfindung ist.

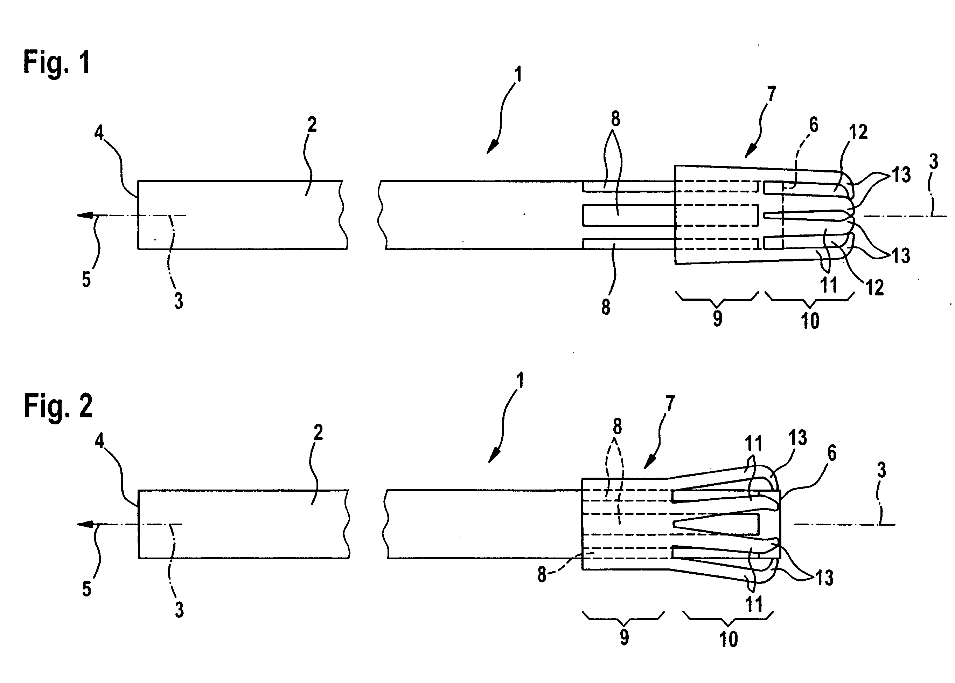

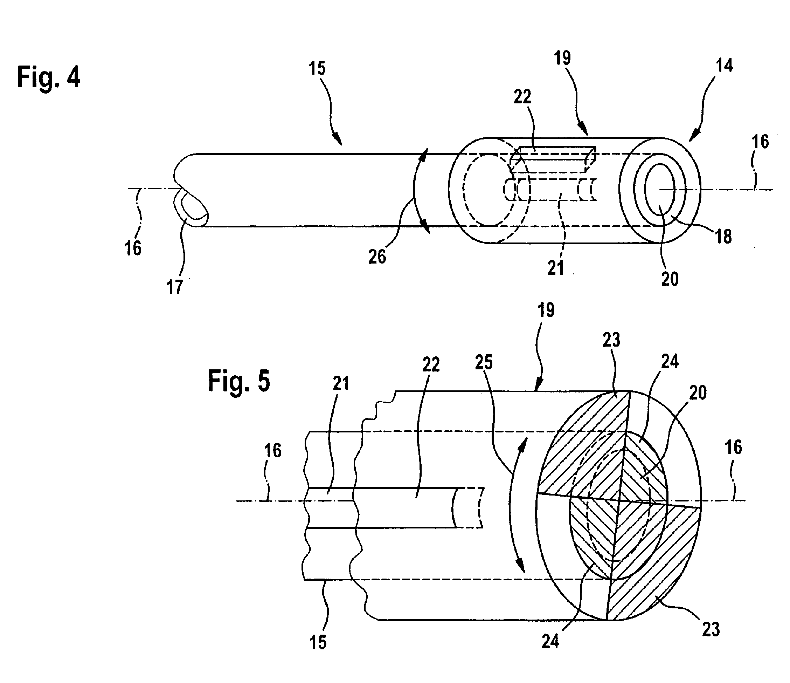

Die Figuren 1 bis 3 geben eine erste Umsetzung der Erfindung wieder, wie sie mit den Patentansprüchen 1 bis 14 und 25 beansprucht wird. Die Figuren 4 und 5 zeigen eine zweite Umsetzung welche kein Gegenstand der beanspruchten Erfindung ist.

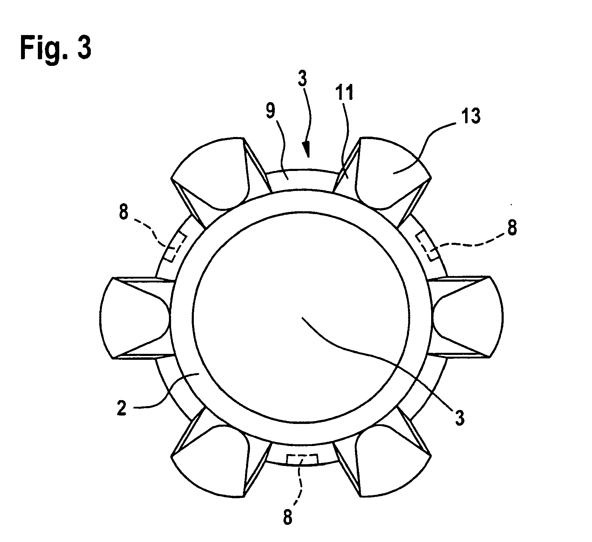

Die Fig. 1 und 2 zeigen Seitenansichten auf ein erfindungsgemäßes Hilfsmittel 1, wobei Fig. 1 die erste Saugposition des Hilfsmittels 1 darstellt, in der ein allgemeines Absaugen des Speichels erfolgt. Die Figuren 2 und 3 betreffen Darstellungen des Hilfsmittels 1 in der zweiten Saugposition, die sich vor allem zum punktuellen Absaugen eignet.

Das in den Figuren 1 bis 3 dargestellte Hilfsmittel 1 weist einen entlang seiner Längsachse 3 angeordneten Schlauchabschnitt 2 auf. Der Schlauchabschnitt 2 besteht aus einem transparenten, flexiblen Kunststoff, in dessen Wand zur bleibenden Verformung ein Stahldraht eingearbeitet sein kann.

Das in den Figuren 1 und 2 links dargestellte erste Ende 4 des Schlauchabschnitts 2 ist an ein nicht weiter dargestelltes Unterdrucksystem angeschlossen, mit dem kontinuierlich Luft abgesaugt wird. Die Luftströmung wird durch den Pfeil 5 dargestellt. Das gegenüberliegende zweite Ende 6 des Schlauchabschnitts 2 trägt ein axial verschiebliches Kopfstück 7. Zur Bewerkstelligung der Verschieblichkeit gegenüber dem Schlauchabschnitt 2 sind in den äußeren Umfang des Schlauchabschnitts 2 gleichmäßig über den Umfang verteilte Längsnuten 8 eingebracht, die mit Abstand vor dem stirnseitigen Ende des Schlauchabschnitts 2 enden.

Das Kopfstück 7 ist unterteilt in einen ersten Längsabschnitt 9, der das zweite Ende 6 des Schlauchabschnitts 2 muffenartig umgreift. An der Innenseite des Längsabschnitts 9 sind nicht dargestellte Überstände in Form von Zapfen angeordnet, die sich in radialer Richtung zur Achse 3 hin strecken und in die Längsnuten 8 eingreifen. Auf diese Weise bilden die Längsnuten 8 mit den Zapfen Zwangsführungen für die axiale Bewegung des Kopfstücks 7 auf dem Schlauchabschnitt 2. Die stirnseitigen Enden der Längsnuten 8 begrenzen das Ausmaß der Bewegung, indem sie einen Anschlag für die Zapfen bilden.

Der zweite Längsabschnitt 10 des Kopfstücks 7 wird von sechs achsparallelen Längsarmen 11 gebildet, die unter Einhaltung eines seitlichen Abstands gleichmäßig über den Umfang verteilt sind. Auf diese Weise werden sechs Längsschlitze 12 gebildet, welche die Saugöffnungen des Kopfstücks in der ersten Saugposition darstellen. Die Längsarme 11 zeigen elastische Eigenschaften, so dass sie nach einer Verformung in ihre Ursprungslage zurückfedern. Die Enden 13 der Längsarme 11 sind in Richtung zur Längsachse 3 hin umgebogen und können sich im Bereich der Längsachse 3 berühren.

Zur Erlangung der zweiten Saugposition (Fig. 2 und 3) wird das Kopfstück 7 axial in Richtung des ersten Endes 4 des Schlauchabschnitts 2 geschoben. Dabei ist eine Führung des Kopfstücks 7 durch die Längsnuten 8 und Zapfen gegeben. Die axiale Bewegung wird gestoppt durch das Ende der Längsnuten 8, das einen Anschlag für jeden Zapfen bildet.

Beim Aufschieben des Kopfstücks 7 auf den Schlauchabschnitt 2 gelangen die Längsschlitze 12 in den geschlossenen Bereich des Schlauchabschnitts 2, so dass deren Saugwirkung verloren geht. Gleichzeitig findet ein Aufspreizen der Längsarme 11 durch den Schlauchabschnitt 2 statt, indem sich die umgebogenen und konvergierenden Enden 13 der Längsarme 11 an der Außenseite des Schlauchabschnitts 2 abstützen. Dabei wird der gesamte Querschnitt des Schlauchabschnitts 2 freigegeben, so dass lediglich durch das stirnseitige freie Ende des Schlauchabschnitts 2 Luft angesaugt wird. Die dadurch stattfindende Konzentrierung des Unterdrucks auf nur eine große Öffnung ermöglicht ein punktuelles Absaugen mit hoher Saugkraft.

Fig. 4 zeigt eine andere Ausführungsform eines Hilfsmittel 14 welches kein Gegenstand der beanspruchten Erfindung ist. Man sieht einen Schlauchabschnitt 15 entlang einer Achse 16 mit einem ersten Ende 17, das zum Anschluss an ein Unterdrucksystem gedacht ist und mit einem zweiten Ende 18, das dem Ende 17 gegenüberliegt und an seiner Stirnseite eine Saugöffnung 20 zum punktuellen Absaugen besitzt. Im endnahen Umfangsbereich sind im Schlauchabschnitt 15 mehrere gleichmäßig über den Umfang verteilte Saugöffnungen 21 angeordnet, von denen der besseren Übersichtlichkeit halber nur eine stellvertretend für alle dargestellt ist. Die Form der Saugöffnung 21 kann vielfältig sein (Kreis, Oval, Quadrat, Rechteck, etc.), wobei im vorliegenden Beispiel die Saugöffnungen 21 von Längsschlitzen gebildet werden.

Ferner sieht man in Fig. 4 ein muffenförmiges Kopfstück 19, das kontaktbehaftet und verschieblich auf dem Schlauchabschnitt 15 sitzt. Wie aus Fig. 4 ersichtlich, kann das Kopfstück 19 bündig mit dem Ende 18 abschließen. Ebenso ist es möglich, dass das stirnseitige Ende des Kopfstücks 19 mit axialem Versatz zum Ende 18 angeordnet ist.

In einer einfachen Ausführungsform sind zwischen Kopfstück 19 und Schlauchabschnitt 15 keine Führungselemente vorgesehen, wodurch das Kopfstück 19 frei auf dem Schlauchabschnitt 15 verschiebbar ist. Es ist also möglich, sowohl axiale als auch rotative oder kombinierte Relativbewegungen auszuführen. Bevorzugt ist eine Drehbewegung des Kopfstücks 19 gegenüber dem Schlauchabschnitt 15, wie durch den Pfeil 26 angedeutet ist.

Dem gegenüber vorteilhaft ist das Vorhersehen von Führungs-, Verriegelungs- und Anschlagelemente, die die Relativbewegung zwischen Kopfstück 19 und Schlauchabschnitt 15 vorgeben und begrenzen. Diese Elemente sind in den Fig. 4 und 5 zeichnerisch nicht dargestellt, da deren mögliche konstruktive Ausbildung bereits in den Fig. 1 bis 3 gezeigt ist, so dass hier auf den entsprechenden Teil der Beschreibung verwiesen wird.

Das Kopfstück 19 weist in seinem Mantel Saugöffnungen 22 auf, die in Form, Größe, Anzahl und Anordnung den Saugöffnungen 21 im Schlauchabschnitt 15 entsprechen.

Dadurch ist es möglich, das Kopfstück 19 aus der in Fig. 4 gezeigten zweiten Saugposition mit nicht überlappenden Saugöffnungen 21 und 22 zum punktuellen Absaugen durch Relativverschiebung gegenüber dem Schlauchabschnitt 15, vorzugsweise durch Drehen um die Achse 16, in die zweite Saugposition mit überlappenden Öffnungen 21 und 22 zu bringen. Dadurch entstehen neben der Saugöffnung 20 zusätzlich durchgängige Öffnungen 21 und 22 zum allgemeinen Absaugen des Speichels eines Patienten während seiner Behandlung.

Bei der in Fig. 4 dargestellten Ausführungsform , welche kein Gegenstand der beanspruchten Erfindung ist, bleibt die Saugöffnung 20 auch in der ersten Saugposition geöffnet. Das kann unter Umständen zu einem Festsaugen des Hilfsmittels 14 an der Schleimhaut des Patienten führen, was eventuell als unangenehm empfunden wird. Bei der gemäß Fig. 5 weiter entwickelten Ausführungsform die kein Gegenstand der beanspruchten Erfindung ist, ist das stirnseitige Ende des in Fig. 4 dargestellten Kopfstücks 19 und Schlauchabschnitts 15 zur Ausbildung eines Verschlusses modifiziert.

Zur Bildung eines Verschlusses für die Öffnung 20 ist das stirnseitige Ende des Kopfstücks 19 in vier Quadranten unterteilt, wobei im Bereich zweier sich diametral gegenüberliegenden Quadranten sektorförmige Abdeckscheiben 23 angeordnet sind und die jeweils benachbarten Quadranten frei bleiben. In entsprechender Weise ist das stirnseitige Ende 18 des Schlauchabschnitts 15 ausgebildet mit den sektorförmigen Abdeckscheiben 24.

In einer ersten Saugposition (Fig. 5) bei überlappenden Öffnungen 21 und 22 sind die Abdeckscheiben 23 und 24 derart zueinander angeordnet, dass die Öffnung 20 vollständig verschlossen ist. Ein Absaugen erfolgt lediglich über die Saugöffnungen 21 und 22.

Zum Erreichen der zweiten Saugposition zum Zwecke des punktuellen Absaugens wird das Kopfstück 19 in Richtung des Pfeils 25 um die Achse 16 um einen Viertelkreis gedreht, wodurch die Saugöffnungen 21 und 22 in eine nicht überlappende Position gelangen. Gleichzeitig werden die Abdeckscheiben 23 und 24 in jeweils gleichen Quadranten übereinander geschoben, so dass in den übrigen zwei Quadranten die Öffnung 20 freigegeben ist.

Alternativ ist zur Ausbildung eines Verschlusses auch ein axiales Verschieben des Kopfstücks 19 auf dem Schlauchabschnitt 15 möglich. Zum Verschließen der Öffnung 20 wird dann das Kopfstück 19 so lange axial verschoben, bis die Abdeckscheiben 23 und 24 in einer Ebene liegen. Das Öffnen der Öffnung 20 geschieht durch axiales Verschieben des Kopfstücks 19 gegenüber dem Schlauchabschnitt 15, bis sich ein axialer Versatz zwischen den Abdeckscheiben 23 und 24 einstellt.

## Patentansprüche

1. Hilfsmittel zum Absaugen von Flüssigkeiten und Feststoffen aus dem Mund- und Rachenraum während dentalmedizinischer Behandlungen,
das einen Schlauchabschnitt (2) besitzt, mit einem ersten, mit Unterdruck beaufschlagbaren Ende (4) und mit einem zweiten, eine Saugöffnung bildenden Ende (6),
und das ein muffenartiges Kopfstück (7) besitzt, das lediglich auf dem zweiten Ende (6) des Schlauchabschnitts (2) angeordnet ist und das unterteilt ist in einen ersten Längsabschnitt (9) und einen zweiten Längsabschnitt (10), wobei im zweiten Längsabschnitt (10) umfangseitig mindestens eine Saugöffnungen (12) angeordnet ist,
und wobei das Kopfstück (7) zwischen einer ersten Saugposition zum allgemeinen Absaugen und einer zweiten Saugposition zum punktuellen Absaugen axial oder wendelförmig verschieblich auf dem zweiten Ende (6) des Schlauchabschnitts (2) sitzt und dabei das zweite Ende (6) des Schlauchabschnitts (2) umgreift,
und wobei in der ersten Sauposition zum allgemeinen Ansaugen der erste Längsabschnitt (9) des Kopfstücks (7) mit dem zweiten Ende (6) des Schlauchabschnitts (2) überlappt und der zweite Längsabschnitt (10) des Kopfstücks (7) über das zweite Ende (6) des Schlauchabschnitts (2) übersteht, so dass die mindestens eine umfangseitige Saugöffnungen (12) im zweiten Längsabschnitt (10) des Kopfstücks (7) als Saugöffnung wirksam ist,
und wobei in der zweiten Saugposition zum punktuellen Absaugen der erste Längsabschnitt (9) und der zweite Längsabschnitt (10) des Kopfstücks (7) mit dem zweiten Ende (6) des Schlauchabschnitts (2) überlappen, so dass die mindestens eine umfangseitige Saugöffnung (12) im zweiten Längsabschnitt (10) des Kopfstücks (7) von dem zweiten Ende (6) des Schlauchabschnitts (2) überdeckt ist und lediglich die stirnseitige Öffnung am zweiten Ende (6) des Schlauchabschnitts (2) als Saugöffnung wirksam ist.

2. Hilfsmittel nach Anspruch 1, **dadurch gekennzeichnet, dass** der Schlauchabschnitt (2) an seinem zweiten Ende (6) einen Anschlag für die erste Saugposition und/oder zweite Saugposition aufweist.

3. Hilfsmittel nach Anspruch 1 oder 2, **dadurch gekennzeichnet, dass** das Kopfstück (7) eine Verriegelung aufweist, in der ersten Saugposition und/oder zweiten Saugposition verriegelbar ist.

4. Hilfsmittel nach einem der Ansprüche 1 bis 3, **dadurch gekennzeichnet, dass** der Schlauchabschnitt (2) eine Zwangsführung aufweist, innerhalb der das Kopfstück (7) bei einer axialen Bewegung gegenüber dem Schlauchabschnitt (2) zwangsgeführt ist.

5. Hilfsmittel nach Anspruch 4, **dadurch gekennzeichnet, dass** die Zwangsführung eine Nut (8) und einen darin eingreifenden Überstand umfasst.

6. Hilfsmittel nach Anspruch 4 oder 5, **dadurch gekennzeichnet, dass** die Zwangsführung achsparallel zur Längsachse (3) des Schlauchabschnitts (2) angeordnet ist.

7. Hilfsmittel nach Anspruch 4 oder 5, **dadurch gekennzeichnet, dass** die Zwangsführung wendelförmig um den Schlauchabschnitt (2) angeordnet ist.

8. Hilfsmittel nach Anspruch 7, **dadurch gekennzeichnet, dass** die Ganghöhe der Wendel bei einer halben Umdrehung der Länge des Kopfstücks (7) entspricht.

9. Hilfsmittel nach einem der Ansprüche 1 bis 8, **dadurch gekennzeichnet, dass** der zweite Längsabschnitt (10) des Kopfstücks (7) mehrere Längsarme (11) umfasst, die zur Ausbildung von Längsschlitzen (12) als Saugöffnungen in gegenseitigem seitlichem Abstand angeordnet sind.

10. Hilfsmittel nach Anspruch 9, **dadurch gekennzeichnet, dass** die Längsarme (11) elastische Eigenschaften aufweisen und zu ihrem freien Ende hin konvergieren.

11. Hilfsmittel nach Anspruch 9 oder 10, **dadurch gekennzeichnet, dass** die Längsarme (11) am freien Ende zur Längsachse (3) des Kopfstücks (7) hin gebogen sind.

12. Hilfsmittel nach einem der Ansprüche 9 bis 11, **dadurch gekennzeichnet, dass** sich die Längsarme (11) zum freien Ende hin konisch verjüngten.

13. Hilfsmittel nach einem der Ansprüche 9 bis 12, **dadurch gekennzeichnet, dass** das Kopfstück (7) sechs gleichmäßig über den Umfang verteilte Längsarme (11) aufweist.

14. Hilfsmittel nach einem der Ansprüche 9 bis 13, **dadurch gekennzeichnet, dass** das Kopfstück (7) am stirnseitigen Ende (6) des zweiten Längsabschnitt (10) eine Öffnung aufweiset.

15. Hilfsmittel nach einem der Ansprüche 1 bis 14, **dadurch gekennzeichnet, dass** das zweite Ende (6; 18) des Schlauchabschnitts (2; 15) zweiteilig ausgebildet ist, wobei das erste Teil vom Schlauchabschnitt (2; 15) gebildet ist, an dem das zweite Teil befestigt ist, wobei im wesentlichen lediglich das zweite Teil mit dem Kopfstück (7; 19) zusammenwirkt.

## Claims

1. A device for aspirating fluids and solids from the mouth and throat area during dental-medical treatments,
which has a tube section (2) with a first end (4), to which an underpressure can be applied, and with a second end (6) forming a suction opening,
and which has a sleeve-like head (7) which is mounted only on the second end (6) of the tube section (2) and which is divided into a first longitudinal section (9) and a second longitudinal section (10), wherein at least one suction opening (12) is provided peripherally in the second longitudinal section (10),
and wherein, between a first suction position for general aspiration and a second suction position for localised aspiration, the head (7) is fitted axially or helically displaceable on the second end (6) of the tube section (2) and thus engages over the second end (6) of the tube section (2),
and wherein, in the first suction position for general aspiration, the first longitudinal section (9) of the head (7) overlaps the second end (6) of the tube section (2) and the second longitudinal section (10) of the head (7) projects over the second end (6) of the tube section (2) so that the at least one peripheral suction opening (12) is operative as a suction opening in the second longitudinal section (10) of the head (7), and wherein, in the second suction position for localised aspiration, the first longitudinal section (9) and the second longitudinal section (10) of the head (7) overlap the second end (6) of the tube section (2) so that the at least one peripheral suction opening (12) in the second longitudinal section (10) of the head (7) is covered by the second end (6) of the tube section (2) and only the end-face opening at the second end (6) of the tube section (2) is operative as a suction opening.

2. A device according to Claim 1, **characterised in that** at its second end the tube section (2) has a stop member for the first suction position and/or the second suction position.

3. A device according to Claim 1 or 2, **characterised in that** the head (7) has a locking means and can be locked in its first suction position and/or second suction position.

4. A device according to any one of Claims 1 to 3, **characterised in that** the tube section (2) has a constrained guide, within which the head (7) is guided in a constrained manner during axial movement in relation to the tube section (2).

5. A device according to Claim 4, **characterised in that** the constrained guide comprises a groove (8) and a projection engaging therein.

6. A device according to Claim 4 or 5, **characterised in that** the constrained guide is arranged axially parallel to the longitudinal axis (3) of the tube section (2).

7. A device according to Claim 4 or 5, **characterised in that** the constrained guide is arranged helically around the tube section (2).

8. A device according to Claim 7, **characterised in that** the screw pitch of the helix corresponds, with a half revolution, to the length of the head (7).

9. A device according to any one of Claims 1 to 8, **characterised in that** the second longitudinal section (10) of the head (7) comprises a plurality of longitudinal arms (11) which are arranged at a mutual lateral distance apart to form longitudinal slots (12) as suction openings.

10. A device according to Claim 9, **characterised in that** the longitudinal arms (11) have elastic properties and converge towards their free ends.

11. A device according to Claim 9 or 10, **characterised in that** the longitudinal arms (11) are bent at their free end towards the longitudinal axis (3) of the head (7).

12. A device according to any one of Claims 9 to 11, **characterised in that** the longitudinal arms (11) are tapered conically towards their free end.

13. A device according to any one of Claims 9 to 12, **characterised in that** the head (7) has six longitudinal arms (11) spaced apart uniformly around its circumference.

14. A device according to any one Claims 9 to 13, **characterised in that** the head (7) has an opening at the end-face end (6) of the second longitudinal section (10).

15. A device according to any one of Claims 1 to 14, **characterised in that** the second end (6;18) of the tube section (2;15) is formed in two parts, wherein the first part is formed by the tube section (2;15), to which the second part is fastened, wherein essentially only the second part co-operates with the head (7;19).

## Revendications

1. Accessoire pour aspirer des liquides et des matières solides de la région de la bouche et du pharynx pendant des traitements de médecine dentaire,
qui possède un segment de tuyau souple (2), avec une première extrémité (4) pouvant être alimentée en pression négative, et avec une deuxième extrémité (6) formant une ouverture d'aspiration,
et qui possède une pièce de tête du genre manchon (7), qui est disposée uniquement sur la deuxième extrémité (6) du segment de tuyau souple (2) et qui est divisée en un premier segment longitudinal (9) et un deuxième segment longitudinal (10), sachant qu'au moins une ouverture d'aspiration (12) est disposée sur le pourtour du deuxième segment longitudinal (10),
et sachant que la pièce de tête (7) repose sur la deuxième extrémité (6) du segment de tuyau souple (2) avec possibilité de translation axiale ou hélicoïdale entre une première position d'aspiration pour l'aspiration générale et une deuxième position d'aspiration pour l'aspiration ponctuelle, en s'engageant ce faisant autour de la deuxième extrémité (6) du segment de tuyau souple (2),
et sachant que dans la première position d'aspiration pour l'aspiration générale, le premier segment longitudinal (9) de la pièce de tête (7) chevauche la deuxième extrémité (6) du segment de tuyau souple (2) et le deuxième segment longitudinal (10) de la pièce de tête (7) dépasse de la deuxième extrémité (6) du segment de tuyau souple (2), de sorte que l'ouverture d'aspiration périphérique au moins unique (12) du deuxième segment longitudinal (10) de la pièce de tête (7) est active comme ouverture d'aspiration,
et sachant que dans la deuxième position d'aspiration pour l'aspiration ponctuelle, le premier segment longitudinal (9) et le deuxième segment longitudinal (10) de la pièce de tête (7) chevauchent la deuxième extrémité (6) du segment de tuyau souple (2), de sorte que l'ouverture d'aspiration périphérique au moins unique (12) du deuxième segment longitudinal (10) de la pièce de tête (7) est recouverte par la deuxième extrémité (6) du segment de tuyau souple (2) et que seule l'ouverture frontale à la deuxième extrémité (6) du segment de tuyau souple (2) est active comme ouverture d'aspiration.

2. Accessoire selon la revendication 1, **caractérisé en ce que** le segment de tuyau souple (2) présente à sa deuxième extrémité (6) une butée pour la première position d'aspiration et/ou pour la deuxième position d'aspiration.

3. Accessoire selon la revendication 1 ou 2, **caractérisé en ce que** la pièce de tête (7) présente un verrouillage permettant de verrouiller la première position d'aspiration et/ou la deuxième position d'aspiration.

4. Accessoire selon l'une des revendications 1 à 3, **caractérisé en ce que** le segment de tuyau souple (2) présente un guidage forcé, à l'intérieur duquel la pièce de tête (7) est guidée de manière forcée lors d'un déplacement axial par rapport au segment de tuyau souple (2).

5. Accessoire selon la revendication 4, **caractérisé en ce que** le guidage forcé comprend une rainure (8) et une saillie s'engageant dans cette rainure.

6. Accessoire selon la revendication 4 ou 5, **caractérisé en ce que** le guidage forcé est disposé en parallélisme axial avec l'axe longitudinal (3) du segment de tuyau souple (2).

7. Accessoire selon la revendication 4 ou 5, **caractérisé en ce que** le guidage forcé est disposé en hélice autour du segment de tuyau souple (2).

8. Accessoire selon la revendication 7, **caractérisé en ce que** le pas de l'hélice correspond pour un demi-tour à la longueur de la pièce de tête (7).

9. Accessoire selon l'une des revendications 1 à 8, **caractérisé en ce que** le deuxième segment longitudinal (10) de la pièce de tête (7) comprend plusieurs bras longitudinaux (11), qui sont disposés à distance latérale mutuelle afin de former des fentes longitudinales (12) comme ouvertures d'aspiration.

10. Accessoire selon la revendication 9, **caractérisé en ce que** les bras longitudinaux (11) présentent des propriétés élastiques et convergent en direction de leur extrémité libre.

11. Accessoire selon la revendication 9 ou 10, **caractérisé en ce que** les bras longitudinaux (11) sont, à l'extrémité libre, courbés en direction de l'axe longitudinal (3) de la pièce de tête (7).

12. Accessoire selon l'une des revendications 9 à 11, **caractérisé en ce que** les bras longitudinaux (11) se rétrécissent coniquement en direction de l'extrémité libre.

13. Accessoire selon l'une des revendications 9 à 12, **caractérisé en ce que** la pièce de tête (7) présente six bras longitudinaux (11) uniformément répartis sur le pourtour.

14. Accessoire selon l'une des revendications 9 à 13, **caractérisé en ce que** la pièce de tête (7) présente une ouverture à l'extrémité frontale (6) du deuxième segment longitudinal (10).

15. Accessoire selon l'une des revendications 1 à 14, **caractérisé en ce que** la deuxième extrémité (6 ; 18) du segment de tuyau souple (2 ; 15) est réalisée en deux parties, sachant que la première partie est formée par le segment de tuyau souple (2 ; 15), auquel est fixée la deuxième partie, sachant que, pour l'essentiel, seule la deuxième partie coopère avec la pièce de tête (7 ; 19).
